# EUROPEAN PATENT SPECIFICATION

(11) **EP 3 367 778 B1**
(45) Date of publication and mention of the grant of the patent: **11.12.2019**
(21) Application number: 16831512.5
(22) Date of filing: 29.10.2016
(51) Int. Cl.: A01D 46/20, A01D 46/28

(54) **SELF-PROPELLED MACHINE OF PROCESSING ESPALIER YARNS**
SELBSTFAHRENDE MASCHINE FÜR PFLANZUNGEN IN SPALIER
MACHINE AUTOMOTRICE POUR CHAMP EN ESPALIER

(30) Priority: 30.10.2015 IT UB20155238
(43) Date of publication of application: 05.09.2018
(73) Proprietor: M.C. Project S.r.l., 29027 Piacenza (IT)
(72) Inventor: CAPELLI, Fabio, 29027 Piacenza (IT)
(74) Representative: Palagini, Giulia
(86) International application number: PCT/IB2016/056545
(87) International publication number: WO 2017/072738

(56) References cited:
- AU-A- 3 462 071
- FR-A1- 2 627 145
- FR-A1- 2 862 478
- US-A- 3 236 329
- US-A- 4 736 574
- US-A1- 2010 139 235

## Description

### Field of the invention

The present invention relates to the agribusiness field and, in particular, it relates to a self-propelled machine adapted to assist operators in a maintenance process of rows in espalier yarns, such as the vineyards.

### State of the art

It is known the so-called shape of breeding espalier. Such comprises a plurality of parallel rows suitably arranged at a distance from each other; a typical example are vineyards rows.

For this breeding type, automatic agricultural machines used for various operations has been made: from the pruning to the harvest that carry out mechanical processes on the rows to minimize time and production costs.

The meccanization of such operations causes however a production of lower quality, so that some breeding rules, for example regarding DOC vineyards, does not accept this, prohibiting their use.

For this reason, in breeding types wherein a mechanical work is not a practice or is not allowed - and are most - it's necessary to provide manual and traditional processes which are more slow and expensive. The pruning, for example, needs beyond 100 ore/Ha of work and affects heavily on production costs and sell.

The manual works are, presently, performed by operators that cross the rows, in any atmospheric condition, to do all the necessary operations to maintain and the development of plant during all arch of the year. The working conditions therefore complex the operations on the rows; cold, wind, rain, wet ground, low visibility give the work difficult and still slower.

In the light of above is observed which the need of assisting conditions work of the operators versus safety, quality and protection; this to the object also of maximizing the production and reducing the costs.

In another aspect is observed, furthermore, as the operators must carrying with them the necessary work tools; aspect also such that causes a further working condition not much assisted.

In this field, machines for collecting fruit, such as apples or other typology are known, but their technique features make these unused in vineyards or other similar breeding.

An example of such machines is disclosed in the documents US 4736574, FR 2627145, US 3236329, FR 2962478, AU 34620 and US A 4736574.

### Description of the invention

It is a feature of the present invention to provide a self-propelled machine adapted to assist maintenance processes of rows in espalier yarns made by operators conformed to ensure an optimal working position and a protection against atmospheric conditions.

It is also of the present invention to provide a self-propelled machine adapted to assist maintenance processes of rows in espalier yarns which is structurally easy and cheap to be made.

These and other objects are achieved by a self-propelled machine adapted to assist maintenance process of rows in espalier yarns comprising:
- a frame with elongated shape that extends between a first end and a second ends opposite to the first end;
- a couple of driving wheels arranged on said first end;
- a directional wheel arranged on said second end;
wherein said frame comprises:
- at least one support arm integrally connected to said frame;
- a support plane for an operator functionally connected to said at least support arm such that said support plane is - in use - in an skim configuration with respect to the ground plane.

In this way, the self-propelled machine according to the present invention, easy the operator during the working operations of the row. The operator, in fact, is on board of the support plane maintaining a height next to the ground plane, and ideal with respect to the row to be processed. The operator it is therefore insulated by the ground and in ideal conditions, especially when the ground is wet, slippery and soft. In other words, the support plane moves integrally with the machine border on the ground plane, thus to ensure to operator a safety, steady and insulated position. In this way, productive conditions of the operator are remarkably improved at speed, safety and quality aspects.

Advantageously, are provided:
- a couple of support arms arranged respectively in said first and second end;
- said support plane that extends between said first and second end, said support plane being connected to said couple of support arms.

Advantageously, adjustment means for adjusting the height of said support plane with respect to the ground plane associated with said couple of support arms is provided.

In a preferred exemplary embodiment, said couple of support arms comprises:
- a first guiding upright and a second guiding upright arranged respectively at said first and second ends;
- a first shaft and a second shaft functionally coupled in a slidingly way with said first guiding upright and said second guiding upright;
such that a sliding engagement is provided, which defines said adjustment means, which is adapted to adjusts in height the support plane with respect to the ground plane.

In particular, said support plane is adjustable in height between a first position, where is arranged below the plane that contains the axis of said driving wheels/directional wheel parallel to said ground plane, and a second position, where is arranged above said plane that contains the axis of said driving wheels/directional wheel parallel to said ground plane.

Preferably a first support plane and a second support plane arranged at opposite part with respect to each other in said frame are provided.

Advantageously, said first support plane is functionally associated with a first couple of support arms, and said second support plane is functionally associated with a second couple of support arms. In this way, the two support planes are operatively independent with respect to each other. The machine thus structured allows therefore to operate at the same time adjacent rows to each other, maximizing the efficiency and to minimize working time.

In particular, each of said first and second support plane is adjustable in height between said first position and said second position.

Advantageously, said adjustment means comprises, furthermore, an actuator, for example a pneumatic actuator, which is adapted to move selectively said first and second shaft along said first and second guiding upright.

Advantageously, a hydraulic control unit associated with said pneumatic actuator is provided.

Preferably, sensor means associated with said actuator and operated by a control unit that, in feedback to a coordinates signal detected by said sensor means, allow to adjust the position in height of the support plane responsive to the shape of the ground plane is provided. In this way, the support plane is configured to automatically adjusts based on the coordinates signal observed by the sensor means. The support plane changes its position in height when, for example, encounters a hummock or an obstacle in the ground thus being always at a height optimal and not causing possible undetermined collisions.

Preferably a coating structure associated with said support plane that comprises an upper portion or roof portion is provided. The roof portion is arranged in a top substantially the support plane from upper edge, thus protect the operator against the atmospheric conditions.

Advantageously, said coating structure comprises, furthermore, side walls that define with said roof portion a working chamber where the operator can operate. The coating structure thus structured is adapted to embrace in use the row such that the operator can operate on the row insulated by the external atmospheric conditions.

Advantageously, the side walls comprise strips of plastic material arranged adjacent to each other. This way, during the movement of the machine along the row the strips located on the walls that is arranged laterally on the row are conformed to be opened leaving space to the row. Such solution allows to don't damage the row during the work.

In particular, a front wall of said side walls of the coating structure extends in a cantilever way beyond the support plane in order to embrace the portion of row to be worked. The operator it is therefore protected by an upper face, from side faces as well as from rear and front faces. In this way, the coating structure allows to create an insulated environment by atmospheric conditions, improving the operative conditions of the operator.

Preferably, the roof portion of the coating structure is a wing structure of a foldable type. In particular, two wings that cover respectively each edge of the machine are provided.

Each wing comprises girder elements hinged to each other to form an articulated frame. The wings are connected to the frame by two upright elements, which are arranged opposite to each other, which support a connection beam.

Each wing is pivotally connected by at least one couple of hinges arranged at respective ends of said connection beam that allow of each wing to pass selectively between an extended configuration which covers the support plane, and a closed configuration. In this way, the coating structure in the extended configuration allows to move the machine easily and easy, to minimize the size. Advantageously, adjustment means which is adapted to adjust the distance of the driving wheels is provided, said adjustment means comprising a first girders portion and a second girders portion coupled telescopically to each other, where the first girders portion is integrally connected to said frame and said second girders portion slides along said first girders portion, said second girders portion being connected to a respective driving wheels. Furthermore, releasable block means which is adapted to block said first and second girders portion is provided.

In a preferred exemplary embodiment, a motor with electric supply, functionally connected to said driving wheels is provided.

Advantageously, also said driving wheels - as well as said directional wheel - are of a steering type. The conveying direction of the machine is oriented with the driving wheels in a front part and the directional wheel in the rear part. Such allows to the operator to go down by the support plane from the rear part without causing a dangerous contact with the wheels in movement. The only directional rear wheel, in fact, is protected to define a free side space that allows the rise or descent of the operator.

Preferably, an automatic trajectory system, operated by said control unit that controls from a position sensor, the trajectory of said machine is provided.

Advantageously, a GPS sensor is provided. Alternatively, or jointly with the GPS sensor a tracking sensors system that allow to detect the distance of the machine by the rows, to keep the machine, and then the support plane, at an optimal distance by the row is provided.

The tracking sensors system allows also to keep in a middle position the machine between two rows adjacent to each other in order that its can be processed contemporaneously.

In particular, said control unit, furthermore, is adapted to control a power of said electric motor such that is adapted to adjust the speed of the machine along the row.

In a preferred exemplary embodiment, said machine comprises, furthermore, an electricity generator which is adapted to light the row during the process or to supply electric tools used to process the row.

Furthermore, said hydraulic control unit is adapted to control the pneumatic movement of said actuator configured to adjust in height said plane support, ma also to adjust a wheelbase wheels, and a compressor configured to supply pneumatic tools.

Preferably, furthermore, a heating system/conditioning arranged on said working chamber is provided.

### Description of the figures of the invention

Further characteristic and advantages of the invention are better shown by examination the following detailed description of a preferred embodiment, but not exclusive, shown for example and not limitative, with the support of the attached drawings, wherein:
- Fig. 1 shows a perspective view of a self-propelled machine adapted to assist maintenance process of rows in espalier yarns in an agricultural field, according to the present invention, during a working step;
- Fig. 2 shows an elevational front view of the machine of Fig. 1;
- Fig. 3 shows a perspective side view of the machine to process rows, according to the present invention;
- Fig. 4 shows a perspective side view of the machine to process rows, from opposite edge to the view of Fig. 3;
- Fig. 5 shows an elevational side view of the machine of Fig. 1;
- finally, Fig. 6 shows a perspective view from below of the machine according to the present invention.

### Detailed description of the invention

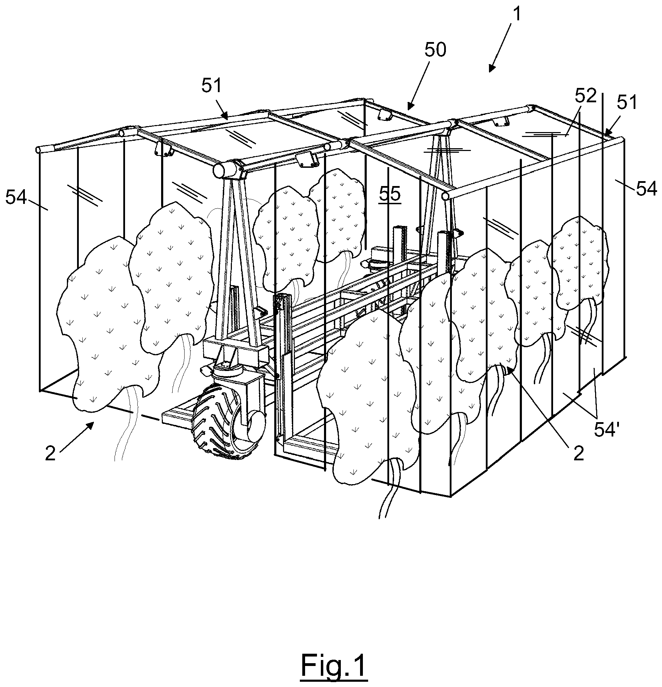

With reference to Fig. 1, a self-propelled machine adapted to assist maintenance processes of rows 2 - in espalier yarns - such as the vineyards, is shown 1.

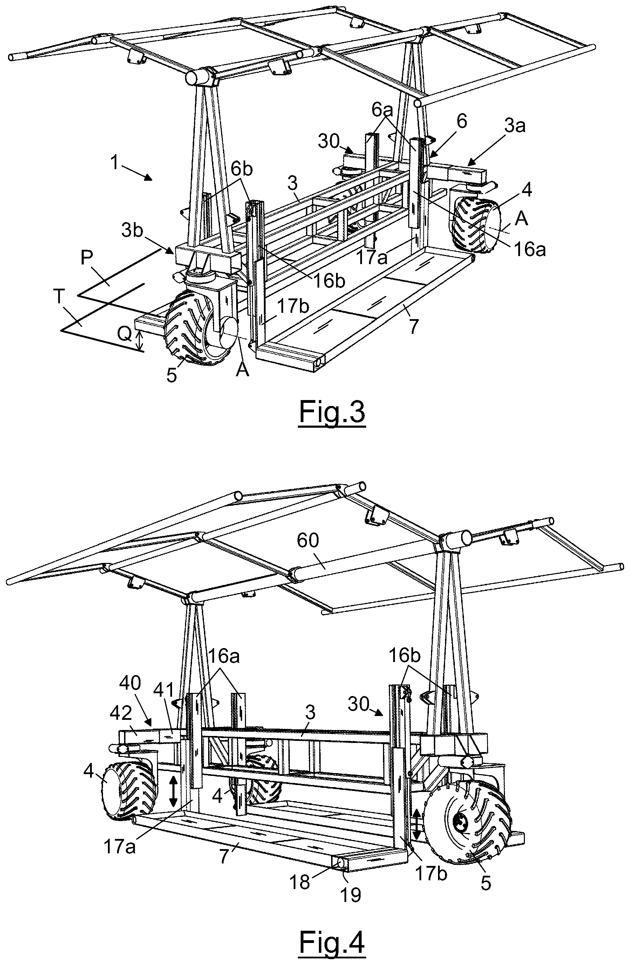

In particular, as better shown in Figs. 3 and 4, the machine 1, according to the present invention, comprises a frame 3 with an elongated shape, with girder elements that define a support structure that extends between a first end 3a and a second end 3b opposite to the first end 3a.

Associated to the frame a couple of driving wheels 4 mounted on the first end 3a, and at least one directional wheel 5 mounted on the second end 3b are functionally provided. The driving wheels 4 are mechanically connected to a motor, for example an electric or combustion, which allows to moving the machine. Instead the directional wheel 5 is conformed to cause at the machine to follow a predetermined trajectory, substantially rectilinear along the row during the process, as well as to give maneuvers in order to cross from a row to another.

Structurally, the frame 3 comprises at least one support arm 6 integrally connected to them, as described in detail, and at least one support plane or platform 7, functionally connected to support arm 6, adapted to receive on board an operator. In particular, the support arm 6 is conformed such that the support plane 7 is in phase operative in a skim configuration with respect to the ground plane T.

In this way, the self-propelled machine 1 keeps insulated by ground the operator that can execute the treatment operations of row on board of the platform, maintaining a optimal working position in terms of height from ground, which substantially reproduce a traditional manual condition of work without machine's assistance. The support plane, thus conformed, is adapted to assist operator displacements or of more operators in a way in which they are insulated by ground in a better condition, especially when the ground is wet, slippery and soft. In other words, the support plane 7 moves integrally with the machine 1 in a configuration in height near to the ground plane T.

From a structural viewpoint as better shown in Figs. 3 and 4 two support planes 7 specular to each other with respect to the frame 3 of the machine each mounted on at least one support arm 6 are provided.

In a preferred exemplary embodiment, as shown in Figs. From 1 to 6, each edge of the machine 1 provides advantageously, a couple of support arms 6a, 6b arranged respectively in the first 3a and second end 3b. The support plane 7 with shape elongated, extends also between the first 3a and the second end 3b, and is functionally supported by the couple of support arms 6a, 6b, at each end.

The support plane 7 is in an advantageous way adjustable in height in order to adjust a height coordinates Q (Fig.3) with respect to the ground plane T, maintaining however always an abut condition to the ground plane.

To this purpose, in a preferred exemplary embodiment, each support arm 6a, 6b comprises a first guiding upright 16a and a second guiding upright 16b. The uprights 16a, 16b are connected to the girder elements of the frame 3 up to a vertical position.

Each upright 16a, 16b is respectively coupled to a first shaft 17a and a second shaft 17b. Each shaft 17a, 17b achieves with the respective upright 16a, 16b a sliding engagement, for example obtained with a sliding joint engagement between the portions. The shafts 17a, 17b comprise a couple of crosspieces 18 that extend in a cantilever way than the latter (Fig.4). The support plane 7 comprises side apertures 19 in which the crosspieces 18 are engaged. In this way, the support plane 7 is also in a cantilevered configuration, in order to be without wall in a front part facing towards the row. Furthermore, in this configuration the support plane 7 can be easily extracted from the crosspieces 18 to allows maintenance operations or other operative demand.

In detail, in a preferred configuration, the support plane 7 is adjustable in height between a first position A where it is arranged below a plane P that contains the axis A of the driving wheels 4 and of the directional wheel 5 parallel to the ground plane T, and a second position B, not shown in detail, where it is arranged beyond the plane P. The movements in height of support plane 7 it is therefore in a predetermined range, for example is defined according to a coordinate Q determined with respect to the ground plane T set between 0.05 m and 1 m, preferably between 0.1m and 0.5m.

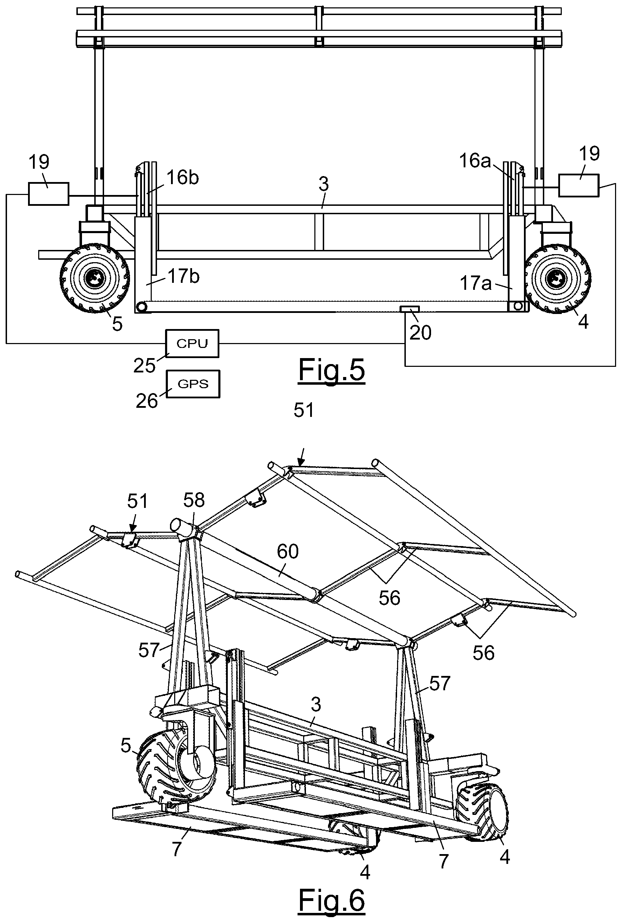

In other structural aspects, the uprights 16a, 16b and the respective shafts 17a, 17b are operated by at least one actuator 19, in particular a couple of actuators - diagrammatically shown in Fig. 5 - that allows to move selectively the first 17a and second shaft 17b with respect to the first 16a and second 16b guiding upright in a concordant way, in order to adjust the coordinates Q of the support plane 7, maintaining it in a substantially horizontal position. Can, furthermore, if necessary, being done an adjusting shifted between the parts for a location at an angle at the plane 7.

Advantageously to operate the actuators 19 a hydraulic control unit is provided, which in addition to this purpose is configurated to operate other drive such as the adjustment means 40 of a wheelbase of the wheels, described below in detail.

The adjusting of the height of the support plane 7 with respect to the ground plane can be actuated through sensor means 20 associated with the actuator 19 and operated by a control unit 25 (Fig. 5) that, in feedback to a coordinates signal detected by the sensor 20, operates the actuators 19 in order to adjust the position in height of the support plane 7.

The sensor or the sensors can be selected for example from laser sensors or alternatively, a detect device adapted to be arranged in contact with the ground plane such that it detect the variation of a height coordinates of the same.

In this way, the support plane 7 is configured to be automatically adjusted based on the coordinates signal observed by the sensor 20. The support plane 7 changes its position in height when, for example, a hummock or an obstacle in the ground thus being always at a height optimal and not causing possible undetermined collisions.

The machine 1 according to the present invention, comprises in an advantageous way a coating structure 50 associated with the support plane 7 that comprises an upper portion or roof portion 52. The roof portion 52 is substantially arranged in an upper position with respect to the support plane 7 from upper edge, thus protect the operator against atmospheric conditions.

The roof portion 52 can, furthermore, having side walls 54 (Fig.1) that define with the roof portion 52 a working chamber 55 where the operator can operate. The coating structure 50 thus structured inclose in use the row 2 such that the operator can operate on the row insulated by the external atmospheric conditions. The front portion 54 of the coating structure 50 extends in a cantilever way beyond the support plane 7 to surround the portion of row to be worked. The operator is therefore protected by upper part, from side part as well as from rear and front parts. This way, the coating structure 50 allows creating an insulated environment by the atmospheric conditions, improving the operative conditions of the operator.

Preferably, the side walls 54 comprises strips 54' made on plastic material arranged adjacent to each other, for example strips of soft rubber.

During the movement of the machine along the row 2 the strips 54' arranged laterally that touch against the row 2 are conformed to be opened leaving space to the row and maintaining a substantial insulation in the working chamber 55.

In a preferred exemplary embodiment, as better shown in Fig. 6, the coating structure 50 is a wing structure 51 of a collapsible type. Each wing 51 covers an edge of the machine 1 and is made by girder elements 56 hinged to each other. The wings are connected to the frame 3 by two upright elements 57 that support a beam 60. Each wing 51 is pivotally connected by a couple of joints 58 respectively arranged at the end of the beam 60 that allow to stop and collapse each wing 51 in a compact configuration.

In other structural aspects, the machine 1 comprises an adjustment means 40 configured to adjust the distance of the driving wheels 4 shown in Fig. 4. These are made by a matching shape between two girders portions 41 and 42 mounted telescopically to each other.

Furthermore, the machine 1 comprises an automatic trajectory system, operated by the control unit 25 that controls from a position sensor 26 (Fig.5), for example a GPS, the trajectory of the machine.

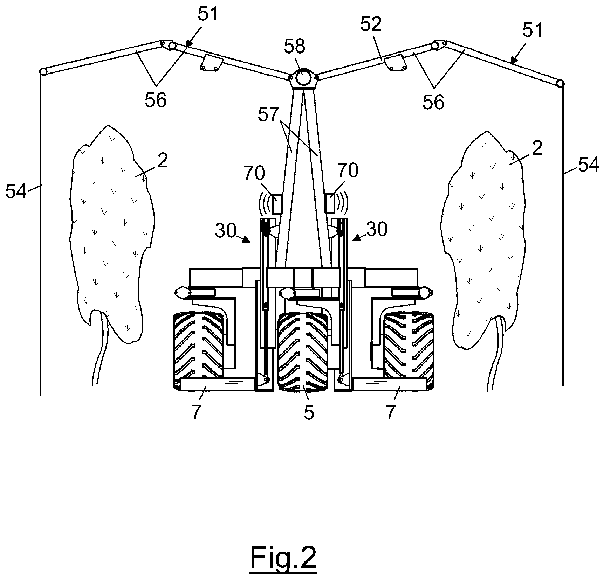

Associated to the GPS sensor or alternatively to this a tracking sensors system 70 that detect the distance of the machine with respect to the row 2 is provided, in order to maintain the machine 1 in a middle o centered position with respect to two rows adjacent (Fig.2). In particular, the control unit 25 controls and administers, furthermore, the power of the electric motor in such a way that it is adapted to adjust the speed of the machine 1 along the row.

In detail the machine 1 comprises mounted on edge an electricity generator for lighting the row during the work or for electric supply tools to process the rows, a compressor for operation pneumatic tools and a heating system/conditioning the working chamber 55.

The description of which above at least one exemplary embodiments particular is capable of show the invention from a viewpoint conceptual so that other, using the prior art, can be changing and/or adapting in various applications an exemplary embodiment without further researches and without moving away from each other by the inventive concept in the limit defined by the claims.

## Claims

1. A self-propelled machine (1) of assistance of a maintenance processes of rows (2) - in espalier yarns - comprising:
- a frame (3) with elongated shape that extends between a first end (3a) and a second end (3b) opposite to the first end (3a);
- a couple of driving wheels (4) arranged on said first end (3a) for moving said machine (1);
- a directional wheel (5) arranged on said second end (3b) for guiding said machine (1) along a trajectory working;
wherein is provided:
- at least one support arm (6) integrally connected to said frame (3) ;
- at least one support plane (7) for an operator functionally connected to said at least support arm (6), such that said support plane (7) is - in use - in a skim configuration with respect to the ground plane (T),
**characterized by fact that**
said support plane (7) is adjustable in height between a first position, where is arranged below the plane that contains the axis of said driving wheels (4) and/or said directional wheel (5) parallel to said ground plane (T), and a second position, where is arranged above said plane that contains the axis of said driving wheels (4) and/or said directional wheel (5) parallel to said ground plane (T),
wherein sensor means (20) associated with an actuator (19) and operated by a control unit (25) that, in feedback to a coordinates signal detected by said sensor means (20), allow to adjust the position in height of the support plane (7) responsive to the shape of the ground plane (T) is provided.

2. Self-propelled machine (1) according to claim 1, wherein are provided:
- a couple of support arms (6a, 6b) arranged respectively in said first (3a) and second end (3b), and
- wherein said support plane (7) extends between said first (3a) and second end (3b) and is connected to said couple of support arms (6a, 6b).

3. Self-propelled machine (1) according to any of claims 1-2, wherein a first support plane and a second support plane (7) arranged at opposite part from one another than said frame (3) are provided, wherein said first support plane (7) is functionally associated with a first couple of support arms (6a, 6b), and said second support plane (7) is functionally associated with a second couple of support arms (6a, 6b), such that said first and second support plane (7) are operatively independent with respect to each other.

4. Self-propelled machine (1) according to claim 2, wherein an adjustment means adapted to adjust the height of said support plane (7) with respect to the ground plane (T) associated with said couple of support arms (6a, 6b) is provided, wherein said couple of support arms (6a, 6b) comprises:
- a first guiding upright (16a) and a second guiding upright (16b) arranged respectively at said first (3a) and second end (3b);
- a first shaft (17a) and a second shaft (17b) functionally coupled in a slidingly way with said first guiding upright (16a) and said second guiding upright (16b) ;
providing a sliding engagement, which defines said adjustment means (30), and adjusts in height the support plane (7) with respect to the ground plane (T).

5. Self-propelled machine (1) according to claim 4, wherein said adjustment means comprises an actuator (19) adapted to selectively move said first (17a) and second shaft (17b) along said first (16a) and second (16b) guiding upright.

6. Self-propelled machine (1) according to any of claims 1-6, wherein a coating structure (50) associated with said support plane (7) that comprises a roof portion (52) is provided, wherein said roof portion (52) is arranged above with respect to said support plane (7), thus protect the operator against the atmospheric conditions.

7. Self-propelled machine (1) according to claim 6, wherein said coating structure (50) comprises side walls (54) that define with said roof portion (52) a working chamber (55) where the operator can operate.

8. Self-propelled machine (1) according to claim 6, wherein said roof portion (52) is a wing structure of a collapsible type.

9. Self-propelled machine (1) according to claim 8, wherein two wings (51) that cover respectively each edge of the machine (1) are provided, each wing (51) is conformed to pass selectively between an extended configuration which covers the support plane (7), and a collapsible configuration, which wings uncovered the support plane (7).

10. Self-propelled machine (1) according to any of claims 1-9, wherein a motor to electric or hydraulic supply functionally connected to said driving wheels (4) is provided, and wherein a automatic trajectory system operated by said control unit (25) that controls from a position sensor (26, 70) the trajectory of said machine (1) is provided.

11. Self-propelled machine (1) according to claim 10, wherein said automatic trajectory system operated by said control unit (25) comprises a GPS sensor.

12. Self-propelled machine (1) according to claim 10, wherein said automatic trajectory system operated by said control unit (25) comprises a tracking sensors system which is adapted to detect the distance of the machine (1) from the row (2), in order to moves and maintains the machine, and then said support plane (7) at an optimal distance by the row (2).

13. Self-propelled machine (1) according to claim 10, wherein said control unit (25) is adapted to control, furthermore, the power of said electric or hydraulic motor in such a way that it is adapted to adjust the speed of the machine (1) along the row.

14. Self-propelled machine (1) according to any of claims 1-13, wherein is provided furthermore:
- an electricity generator for lighting the row during the work or to provide electric supply of tools adapted to process the rows;
- a compressor adapted to supply pneumatic tools;
- a heating system/conditioning said working chamber (55) .

## Patentansprüche

1. Selbstfahrende Maschine (1) zur Unterstützung eines Instandhaltungsprozesses von Reihen (2) - in Spaliergarnen
- umfassend:
- einen Rahmen (3) mit länglicher Form, der sich zwischen einem ersten Ende (3a) und einem zweiten Ende (3b) gegenüber dem ersten Ende (3a) erstreckt,
ein Paar Antriebsräder (4), die an dem ersten Ende (3a) angeordnet sind, um die Maschine (1) zu bewegen,
- ein Richtungsrad (5), das an dem zweiten Ende (3b) angeordnet ist, um die Maschine (1) bei der Arbeit entlang einer Bewegungsbahn zu führen,
wobei vorgesehen ist:
- mindestens ein integral mit dem Rahmen (3) verbundener Tragarm (6),
- mindestens eine Tragebene (7) für einen Bediener, die funktionell mit dem mindestens einen Tragarm (6) verbunden ist, so dass die Tragebene (7) - im Gebrauch - in einer Abstreifkonfiguration in Bezug auf die Bodenebene (T) ist,
**dadurch gekennzeichnet, dass**
die Tragebene (7) in der Höhe zwischen einer ersten Position, die unterhalb der Ebene angeordnet ist, welche die Achse der Antriebsräder (4) und/oder des Richtungsrades (5) parallel zur Bodenebene (T) enthält, und einer zweiten Position, die oberhalb der Ebene angeordnet ist, die die Achse der Antriebsräder (4) und/oder das Richtungsrad (5) parallel zur Bodenebene (T) enthält, einstellbar ist, wobei eine Sensoreinrichtung (20), die einem Stellglied (19) zugeordnet ist und von einer Steuereinheit (25) betrieben wird, die in Rückkopplung auf ein von der Sensoreinrichtung (20) erfasstes Koordinatensignal ermöglicht, die Position in der Höhe der Tragebene (7) als Reaktion auf die Form der Bodenebene (T) einzustellen.

2. Selbstfahrende Maschine (1) nach Anspruch 1, wobei vorgesehen sind:
- ein Paar Stützarme (6a, 6b), die jeweils an dem ersten Ende (3a) und dem zweiten Ende (3b) angeordnet sind, und
- wobei sich die Tragebene (7) zwischen dem ersten Ende (3d) und dem zweiten Ende (3b) erstreckt und mit dem Paar der Stützarme (6a, 6b) verbunden ist.

3. Selbstfahrende Maschine (1) nach einem der Ansprüche 1 bis 2, wobei eine erste Tragebene und eine zweite Tragebene (7) vorgesehen sind, die an einem gegenüberliegenden Teil voneinander als der Rahmen (3) angeordnet sind, wobei die erste Tragebene (7) funktionell einem ersten Paar von Tragarmen (6a, 6b) zugeordnet ist, und die zweite Tragebene (7) funktionell einem zweiten Paar von Tragarmen (6a, 6b) zugeordnet ist, so dass die erste und die zweite Tragebene (7) funktionsfähig unabhängig voneinander sind.

4. Selbstfahrende Maschine (1) nach Anspruch 2, wobei ein Einstellmittel vorgesehen ist, das geeignet ist, die Höhe der Tragebene (7) in Bezug auf die dem Paar von Stützarmen (6a, 6b) zugeordnete Bodenebene (T) einzustellen, wobei das Paar von Stützarmen (6a, 6b) Folgendes umfasst:
- einen ersten Führungsholm (16a) und einen zweiten Führungsholm (16b), die jeweils an dem ersten (3a) und zweiten Ende (3b) angeordnet sind,
- eine erste Welle (17a) und eine zweite Welle (17b), die funktionell gleitend mit dem ersten Führungsholm (16a) und dem zweiten Führungsholm (16b) gekoppelt sind, Bereitstellen eines gleitenden Eingriffs, der das Einstellmittel (301) definiert und die Tragebene (7) in Bezug auf die Bodenebene (T) in der Höhe verstellt.

5. Selbstfahrende Maschine (1) nach Anspruch 4, wobei das Einstellmittel ein Stellglied (19) umfasst, das geeignet ist, die erste Welle (17a) und die zweite Welle (17b) gezielt entlang des ersten (16a) und des zweiten (16b) Führungsholms zu bewegen.

6. Selbstfahrende Maschine (1) nach einem der Ansprüche 1 bis 6, wobei eine der Tragebene (7) zugeordnete Beschichtungsstruktur (50) vorgesehen ist, die einen Dachabschnitt (S2) umfasst, wobei der Dachabschnitt (52) oben in Bezug auf die Tragebene (71) angeordnet ist, wodurch der Bediener vor den Witterungsbedingungen geschützt wird.

7. Selbstfahrende Maschine (1) nach Anspruch 6, wobei die Beschichtungsstruktur (50) Seitenwände (54) umfasst, die mit dem Dachabschnitt (92) eine Arbeitskabine (55) definieren, in der der Bediener arbeiten kann.

8. Selbstfahrende Maschine (1) nach Anspruch 6, wobei der Dachabschnitt (52) eine Flügelstruktur eines faltbaren Typs ist.

9. Selbstfahrende Maschine (1) nach Anspruch 8, wobei zwei Flügel (51) vorgesehen sind, die jeweils jede Kante der Maschine (1) abdecken, wobei jeder Flügel (51) so ausgebildet ist, dass er gezielt zwischen einer erweiterten Konfiguration, die die Tragebene (7) abdeckt, und einer zusammenklappbaren Konfiguration wechselt, in der die Flügel die Tragebene (7) freilegen.

10. Selbstfahrende Maschine (1) nach einem der Ansprüche 1 bis 9, wobei ein Motor zur elektrischen oder hydraulischen Versorgung vorgesehen ist, der funktionell den Antriebsrädern (4) zugeordnet ist, und wobei ein von der Steuereinheit (25) betätigtes automatisches Bewegungsbahnsystem vorgesehen ist, das von einem Positionssensor (26, 70) aus die Bewegungsbahn der Maschine (1) steuert.

11. Selbstfahrende Maschine (1) nach Anspruch 10, wobei das von der Steuereinheit (25) betriebene automatische Bewegungsbahnsystem einen GPS-Sensor umfasst.

12. Selbstfahrende Maschine (1) nach Anspruch 10, wobei das von der Steuereinheit (25) betriebene automatische Bewegungsbahnsystem ein Spurhaltesensorsystem umfasst, das geeignet ist, um den Abstand der Maschine (1) von der Reihe (12) zu erfassen, um die Maschine und dann die Tragebene (7) in einem optimalen Abstand durch die Reihe (2) zu bewegen und zu halten.

13. Selbstfahrende Maschine (1) nach Anspruch 10, wobei die Steuereinheit (25) angepasst ist, um ferner die Leistung des elektrischen oder hydraulischen Motors so zu steuern, dass sie geeignet ist, um die Geschwindigkeit der Maschine (1) entlang der Reihe einzuregulieren.

14. Selbstfahrende Maschine (1) nach einem der Ansprüche 1 bis 13, wobei ferner Folgendes vorgesehen ist:
- ein Stromgenerator zum Beleuchten der Reihe während der Arbeit oder zur elektrischen Versorgung von Werkzeugen, die zum Bearbeiten der Reihen geeignet sind:
- ein Kompressor, der zur Versorgung von Druckluftwerkzeugen geeignet ist,
- ein(e) Heizungssystem/Konditionierung der Arbeitskabine (55).

## Revendications

1. Une machine à autopropulsion (1) d'assistance d'un processus de maintenance de rangées (2) - en fils d'espalier - comprenant :
- un cadre (3) de forme allongée qui s'étend entre une première extrémité (3a) et une deuxième extrémité (3b) opposée à la première extrémité (3a) ;
- un couple de roues motrices (4) agencées sur ladite première extrémité (3a) pour déplacer ladite machine (1) ;
- une roue directionnelle (5) agencée sur ladite deuxième extrémité (3b) pour guider ladite machine (1) le long d'une trajectoire de travail ;
dans laquelle sont prévus :
- au moins un bras de support (6) raccordé d'un seul tenant audit cadre (3) ;
- au moins un plan de support (7) pour un opérateur raccordé fonctionnellement audit au moins un bras de support (6), de telle sorte que ledit plan de support (7) est - lors de l'utilisation - dans une configuration de parcours par rapport au plan du sol (T),
**caractérisé par le fait que**
ledit plan de support (7) est réglable en hauteur entre une première position, où il est agencé au-dessous du plan qui contient l'axe desdites roues motrices (4) et/ou ladite roue directionnelle (5) parallèle audit plan du sol (T), et une deuxième position, où il est agencé au-dessus dudit plan qui contient l'axe desdites roues motrices (4) et/ou ladite roue directionnelle (5) parallèle audit plan du sol (T),
dans laquelle un moyen formant capteur (20) associé à un actionneur (19) et opéré par une unité de commande (25) qui, en retour à un signal de coordonnées détecté par lesdits moyens formant capteurs (20), permet de régler la position en hauteur du plan de support (7) en réponse à la forme du plan du sol (T), est prévu.

2. Machine à autopropulsion (1) selon la revendication l, dans laquelle sont prévus :
- un couple de bras de support (6a, 6b) agencés respectivement dans lesdites première (3a) et deuxième (3b) extrémités, et
- dans laquelle ledit plan de support (7) s'étend entre lesdites première (3a) et deuxième (3b) extrémités et est raccordé audit couple de bras de support (6a, 6b).

3. Machine à autopropulsion (1) selon n'importe lesquelles des revendications 1 à 2, dans laquelle un premier plan de support et un deuxième plan de support (7) agencés au niveau d'une partie opposée l'un par rapport à l'autre que ledit cadre (3) sont prévus, ledit premier plan de support (7) étant fonctionnellement associé à un premier couple de bras de support (6a, 6b), et ledit deuxième plan de support (7) étant fonctionnellement associé à un deuxième couple de bras de support (6a, 6b), de telle sorte que lesdits premier et deuxième plans de support (7) sont opérationnellement indépendants l'un de l'autre.

4. Machine à autopropulsion (1) selon la revendication 2, dans laquelle un moyen de réglage conçu pour régler la hauteur dudit plan de support (7) par rapport au plan du sol (T) associé audit couple de bras de support (6a, 6b) est prévu, ledit couple de bras de support (6a, 6b) comprenant :
- un premier montant de guidage (16a) et un deuxième montant de guidage (16b) agencés respectivement au niveau desdites première (3a) et deuxième (3b) extrémités ;
- un premier arbre (17a) et un deuxième arbre (17b) couplés fonctionnellement de manière coulissante avec ledit premier montant de guidage (16a) et ledit deuxième montant de guidage (16b) ;
le fait de prévoir une mise en prise coulissante, qui définit ledit moyen de réglage (30), et règle en hauteur le plan de support (7) par rapport au plan du sol (T).

5. Machine à autopropulsion (1) selon la revendication 4, dans laquelle ledit moyen de réglage comprend un actionneur (19) conçu pour déplacer sélectivement lesdits premier (17a) et deuxième (17b) arbres le long desdits premier (16a) et deuxième (16b) montants de guidage.

6. Machine à autopropulsion (1) selon n'importe lesquelles des revendications 1 à 6, dans laquelle une structure de revêtement (50) associée audit plan de support (7) qui comprend une portion de toit (52) est prévue, ladite portion de toit (52) étant agencée au-dessus dudit plan de support (7), protégeant ainsi l'opérateur des conditions atmosphériques.

7. Machine à autopropulsion (1) selon la revendication 6, dans laquelle ladite structure de revêtement (50) comprend des parois latérales (54) qui définissent avec ladite portion de toit (92) une chambre de travail (55) où l'opérateur peut opérer.

8. Machine à autopropulsion (1) selon la revendication 6, dans laquelle ladite portion de toit (52) est une structure à ailes d'un type pliable.

9. Machine à autopropulsion (1) selon la revendication 8, dans laquelle deux ailes (51) qui couvrent respectivement chaque bord de la machine (1) sont prévues, chaque aile (51) étant conformée pour passer sélectivement d'une configuration étendue qui recouvre le plan de support (7), à une configuration pliable, où les ailes découvrent le plan de support (7).

10. Machine à autopropulsion (1) selon n'importe lesquelles des revendications 1 à 9, dans laquelle un moteur pour alimenter électriquement ou hydrauliquement raccordé fonctionnellement auxdites roues motrices (4) est prévu, et dans laquelle un système de trajectoire automatique opéré par ladite unité de commande (25) qui commande à partir d'un capteur de position (26, 70) la trajectoire de ladite machine (1) est prévu.

11. Machine à autopropulsion (1) selon la revendication 10, dans laquelle ledit système de trajectoire automatique opéré par ladite unité de commande (25) comprend un capteur GPS.

12. Machine à autopropulsion (1) selon la revendication 10, dans laquelle ledit système de trajectoire automatique opéré par ladite unité de commande (25) comprend un système de capteurs de poursuite qui est conçu pour détecter la distance de la machine (1) par rapport à la rangée (2), afin de déplacer et de maintenir la machine, et ensuite ledit plan de support (7), à une distance optimale par rapport à la rangée (2).

13. Machine à autopropulsion (1) selon la revendication 10, dans laquelle ladite unité de commande (25) est conçue pour commander, en outre, la puissance dudit moteur électrique ou hydraulique de telle sorte qu'il est conçu pour régler la vitesse de la machine (1) le long de la rangée.

14. Machine à autopropulsion (1) selon n'importe lesquelles des revendications 1 à 13, dans laquelle sont en outre prévus :
- un générateur d'électricité pour éclairer la rangée pendant le travail ou pour fournir une alimentation électrique d'outils conçus pour traiter les rangées ;
- un compresseur conçu pour alimenter des outils pneumatiques ;
- un système de chauffage/climatisation de ladite chambre de travail (55).
